(19) **Europäisches Patentamt**
**European Patent Office**
**Office européen des brevets**

(11) **EP 4 450 712 B1**

(12) **EUROPEAN PATENT SPECIFICATION**

(45) Date of publication and mention
of the grant of the patent:
**19.11.2025 Bulletin 2025/47**

(21) Application number: **24167416.7**

(22) Date of filing: **28.03.2024**

(51) International Patent Classification (IPC):
***E02B 3/26*** *(2006.01)*

(52) Cooperative Patent Classification (CPC):
**E02B 3/26;** B63B 2059/025

(54) **PNEUMATIC FENDER AND MANAGEMENT SYSTEM THEREOF**

PNEUMATISCHER KOTFLÜGEL UND VERWALTUNGSSYSTEM DAFÜR

DÉFENSE PNEUMATIQUE ET SON SYSTÈME DE GESTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.04.2023 KR 20230051047**

(43) Date of publication of application:
**23.10.2024 Bulletin 2024/43**

(73) Proprietor: **Hwaseung Corporation Co., Ltd.
Busan 47540 (KR)**

(72) Inventors:
  • **SUNG, Il Kyung
    46247 Busan (KR)**

  • **BAE, Sang Su
    47756 Busan (KR)**
  • **LEE, Jae Moon
    47610 Busan (KR)**
  • **LEE, Tae Kyu
    47557 Busan (KR)**
  • **JO, Yu Jin
    47714 Busan (KR)**

(74) Representative: **Viering, Jentschura & Partner
mbB
Patent- und Rechtsanwälte
Am Brauhaus 8
01099 Dresden (DE)**

(56) References cited:
**JP-A- 2015 143 672    JP-A- H0 843 226**

**Description**

[Technical Field]

The present disclosure relates to a pneumatic fender and a management system thereof, and more specifically, to a pneumatic fender installed on the wall surface of the quay wall or the side of the ship in order to prevent damage to the hull and quay wall when berthing or approaching a ship, and a management system for managing the same.

[Background Art]

A pneumatic fender is installed on the wall surface of the quay wall or the side of the ship in order to prevent damage to the hull and quay wall when berthing or approaching a ship. For example, document JP2015143672 discloses a pneumatic fender.

A pneumatic fender is one which encapsulates compressed air in an airbag-shaped structure made of an elastic material such as rubber, and cushions an impact by air pressure when berthing or approaching a ship. For example, the pneumatic fender is fixed to the wall surface of the quay or the side of the ship by a fixing member and is positioned so that the wall surface does not come into direct contact with the ship when berthing or approaching a ship, thereby preventing the impact.

If the fender is separated from its proper position, the wall surface may come into direct contact with the ship when berthing or approaching a ship, which may result in damage to the hull and quay wall. Additionally, a pneumatic fender may be less effective in preventing impact if appropriate air pressure is not always maintained. Accordingly, the pneumatic fender may have a fender management device arranged therein which is provided with various sensors such as a position sensor and a pressure sensor inside the fender in order to manage the pneumatic fender.

However, the fender management device had a problem in that when a portion of the fender management device was not accommodated in a sealed container, the sensor would break down due to intrusion of seawater or exposure to external impact. In addition, in the case where the fender management device is entirely accommodated in a sealed container but has a communication hole for transmitting air pressure therein, there has been a problem in that seawater intruded from the communication hole and the sensor would break down.

Therefore, in order to prevent failures that occur when the fender management device is exposed to the outside, the fender management device is positioned inside the fender or installed in a casing with a sealed structure. Accordingly, since the fender management device is inside the fender or is sealed by a casing with a sealed structure, seawater may be prevented from penetrating into the fender management system, and the device may be protected without being directly exposed to gas or liquid.

However, when the fender management device is mounted inside the fender or on a casing with a sealed structure as described above, in order to perform an installation operation or a replacement operation of the fender management device, especially a simple replacement operation such as battery replacement, the fender was raised and put on the land to remove the air inside, and then the fender management device had to be taken out from inside the fender or separated from the casing with the sealed structure. Therefore, there was a problem in that a huge amount of time and labor were required in operations of installing, replacing, and maintaining the pneumatic fender management system.

In addition, since a pneumatic fender management device is fixed and installed inside the fender or in the casing with the sealed structure in a floating state, there may be problems in that the position sensor (for example, GPS) is limited in receiving signals from the air or does not receive accurate position signals depending on changes in the position or posture of the fender.

Therefore, a pneumatic fender and a pneumatic fender management system are needed to solve these problems.

[Disclosure]

[Technical Problem]

In order to solve the above problems, an object of the present disclosure is to provide a pneumatic fender that ensures convenience in replacement and maintenance of the pneumatic fender management device.

In addition, another object of the present disclosure is to provide a pneumatic fender configured so that the position sensor of the pneumatic fender management device can well receive signals by minimizing the influence of the movement of the pneumatic fender so as to accurately determine the position of the pneumatic fender.

In addition, another object of the present disclosure is to provide a pneumatic fender management system that can effectively manage the pneumatic fender using the pneumatic fender management device.

[Technical Solution]

The present disclosure provides a pneumatic fender including: a ring-shaped metal fitting housing that is mounted on at least one end of a pneumatic fender and forms a penetrating part penetrating the inside and outside of the pneumatic fender; a plate-shaped flange that is mounted on the penetrating part to block the inside and outside of the pneumatic fender; a wireless transmitter that is mounted on the front surface of the flange defining a surface formed in the external direction of the pneumatic fender; a cover that is mounted on the front surface of the flange to protect a region where the wireless transmitter is mounted; a shaft that has a predetermined length and is mounted on the rear surface of the flange; a position sensor that is mounted on the internal direction end of the shaft and generates position information of the pneumatic fender; and a reflective member that is connected to the shaft between the flange and the position sensor and is rotatable around the shaft, wherein the accuracy of generating position information of the pneumatic fender using the position sensor is greatly improved by ensuring that the position of the reflective member is fixed even when the pneumatic fender is rotated.

Furthermore, the present disclosure provides a pneumatic fender management system that includes a pneumatic fender management unit and a communication unit, and transfers management information including position information or pressure information of the pneumatic fender, which is generated, to the wireless transmitter, and the wireless transmitter converts the management information into one dataset formed based on the generation time along with the unique number of the pneumatic fender and transfers it to the pneumatic fender management unit.

[Advantageous Effects]

According to one embodiment of the present disclosure, it is possible to ensure convenience in maintenance such as an installation operation or a replacement operation of the fender management device by using the arrangement and configuration of the fender metal fitting installed on the pneumatic fender and the fender management device mounted on the fender metal fitting.

In addition, according to one embodiment of the present disclosure, it is possible to accurately generate position information of the pneumatic fender by ensuring that the position sensor receives signals well without being affected by the movement of the fender using a reflective member that can independently control the posture despite the movement of the fender.

Additionally, according to one embodiment of the present disclosure, it is possible to effectively manage the pressure status of the pneumatic fender and management of position information using the pneumatic fender management device.

[Description of Drawings]

FIG. 1 shows a pneumatic fender according to an embodiment of the present disclosure.
FIG. 2 shows a fender metal fitting according to an embodiment of the present disclosure.
FIG. 3 shows a front surface (external direction of the fender) of the fender management device according to an embodiment of the present disclosure.
FIG. 4 shows a rear surface (internal direction of the fender) of the fender management device according to each embodiment of the present disclosure.
FIGS. 5 and 6 show a fender management device according to each embodiment of the present disclosure.
FIG. 7 is a mimetic diagram showing a pneumatic fender management system according to an embodiment of the present disclosure.

[Mode for Disclosure]

Hereinafter, embodiments of the present disclosure are described in detail. However, the present disclosure is not limited to the embodiments disclosed below, but may be implemented in various different forms. The present embodiments are only provided to ensure that the disclosure of the present disclosure is complete and to more completely inform those skilled in the art of the content of the present disclosure.

In the present specification, when an element is referred to as being located 'above' or 'below' another element, this includes both the meaning that one element may be located directly 'above' or 'below' another element, or that an additional element may be interposed between those elements.

In the present specification, the terms 'upper' or 'lower' are relative concepts established from the observer's point of view, and if the observer's point of view changes, 'upper' may mean 'lower', and 'lower' may mean 'upper'.

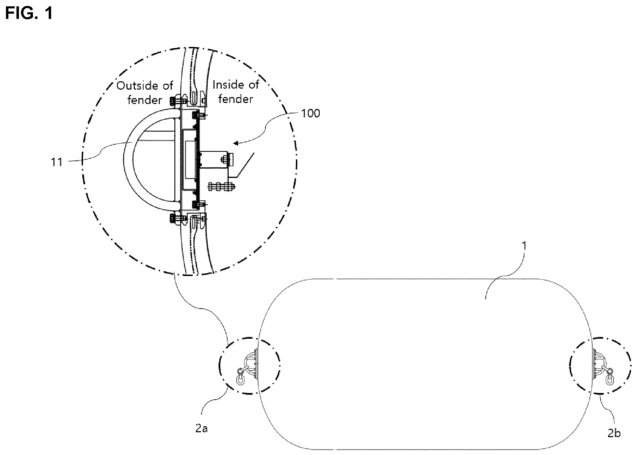

The term 'external direction' referred to in the present specification refers to the direction toward the outside of the fender shown in FIG. 1, and the 'internal direction' refers to the direction toward the inside of the fender shown in FIG. 1.

Hereinafter, a pneumatic fender and a management system thereof will be described in detail with reference to the drawings.

FIG. 1 shows a pneumatic fender according to an embodiment of the present disclosure.

Referring to FIG. 1, the pneumatic fender may include a fender metal fitting.

The pneumatic fender 1 is made of rubber as a main material, and is in the form of a tube which has through-holes formed in both ends thereof so that fender metal fittings 2a and 2b may be mounted thereon, and which may have its inside filled with compressed air. For example, the pneumatic fender 1 may be formed in the form of a cylindrical tube, but is not limited thereto.

The fender metal fittings 2a and 2b mounted on both ends of the pneumatic fender 1 may have a fixing ring 11 formed in the the external direction of the fender. Accordingly, members such as ropes, bands, and chains are mounted on the fixing ring 11 of the fender metal fittings 2a and 2b coupled to the pneumatic fender 1 so that the pneumatic fender 1 may be horizontally installed on the ship or quay wall, and it may be fixed so that the pneumatic fender 1 floating in the water does not separate from the ship or the quay wall along the ocean current. For example, a rope is hung on the fixing ring 11 of the fender metal fittings 2a and 2b mounted on both ends of the pneumatic fender 1, and thus the pneumatic fender 1 is disposed on the quay wall so that the pneumatic fender 1 may prevent the ship and the quay wall from touching each other.

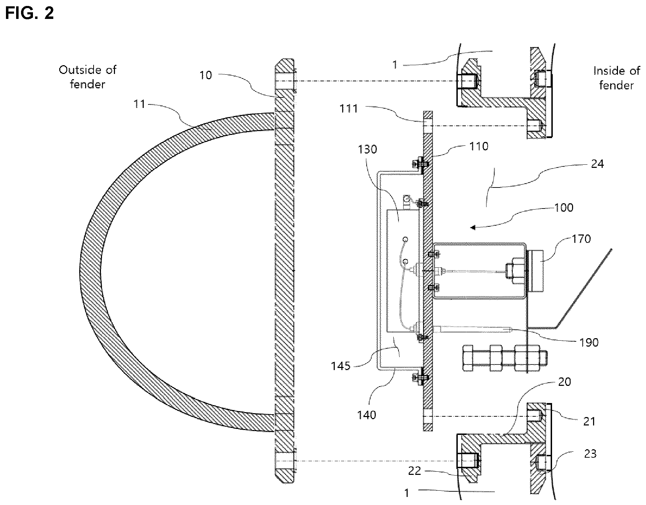

The fender metal fittings 2a and 2b may be manufactured of a metal material that can withstand the weight of the pneumatic fender 1, is resistant to impacts caused by external forces such as waves or wind, and is resistant to corrosion. Accordingly, it is easy to install various devices on the fender metal fittings 2a and 2b. For example, a fender management device 100 for managing the pneumatic fender 1 may be mounted on the fender metal fittings 2a and 2b at one end thereof out of the fender metal fittings 2a and 2b at both ends of the pneumatic fender 1. This will be described in detail through FIG. 2.

FIG. 2 shows a fender metal fitting according to an embodiment of the present disclosure.

Referring to FIG. 2, the fender metal fitting includes a metal fitting housing 20 coupled to the pneumatic fender 1 and a metal fitting stopper 10 fastened to the metal fitting housing 20, and the metal fitting housing 20 may have a fender management device 100 mounted thereon.

The metal fitting housing 20 is in the form of a ring including a penetrating part 24 with a predetermined diameter inside the metal fitting housing 20. In addition, it may include a stopper coupling part 22 that is formed to protrude on the outside and top of the metal fitting housing 20 (outside the fender) and a fender fixing part 23 that is formed to protrude on the outside and bottom of the metal fitting housing 20 (inside the fender). At this time, the top of the stopper coupling part 22 and the bottom of the fender fixing part 23 define the thickness of the metal fitting housing 20.

The metal fitting housing 20 may be coupled to the pneumatic fender 1 by the stopper coupling part 22 and the fender fixing part 23. For example, when the pneumatic fender 1 is thicker than the thickness of the metal fitting housing 20, the stopper coupling part 22 and the fender fixing part 23 may be inserted into the pneumatic fender 1, and a portion of the pneumatic fender 1 may be inserted and fixed in a predetermined gap formed between the stopper coupling part 22 and the fender fixing part 23. At this time, the stopper coupling part 22, the fender fixing part 23, and the pneumatic fender 1 may be fixed to each other with an adhesive, and the pneumatic fender 1 that is in contact with the fender fixing part 23 and the fender fixing part 23 are fixed using a fixing screw (not shown) that can be fastened to the fender fixing part 23 so that the metal fitting housing 20 may be fixed to the pneumatic fender 1. However, the method of fixing the stopper coupling part 22, the fender fixing part 23, and the pneumatic fender 1 is not limited thereto.

The metal fitting housing 20 protrudes to a predetermined length in the direction of the penetrating part 24, and may include a flange coupling part 21 formed at the bottom of the metal fitting housing 20 and on the same surface as the fender fixing part 23. The flange coupling part 21 may be formed in a form corresponding to the flange 110 of the fender management device 100 and the flange fixing bolt hole 111 formed in the flange 110 so that it may be fastened to the fender management device 100. Accordingly, the fender management device 100 may be mounted on the flange coupling part 21 of the metal fitting housing 20. Accordingly, the fender management device 100 may be mounted on the flange coupling part 21 of the metal fitting housing 20. In addition, the inside of the fender may be blocked from the outside of the fender by mounting the fender management device 100 on the flange coupling part 21 of the metal fitting housing 20.

The stopper coupling part 22 of the metal fitting housing 20 may be formed in a form corresponding to the metal fitting stopper 10 so that the metal fitting stopper 10 may be coupled to the metal fitting stopper 10 outside the fender. Accordingly, the penetrating part 24 of the metal fitting housing 20 on which the fender management device 100 is mounted may be sealed from the outside of the fender using the metal fitting stopper 10. Accordingly, it is possible to prevent the fender management device 100 from being exposed to the outside and being damaged.

When the metal fitting stopper 10 is mounted on the stopper coupling part 22, the metal fitting stopper 10 may be formed so as not to contact the fender management device 100. For example, if the cover 140 of the fender management device 100 mounted on the flange coupling part 21 is positioned in the penetrating part 24 but does not exceed the top of the stopper coupling part 22, the metal fitting stopper 10 may be mounted on the stopper coupling part 22 without interference with the fender management device 100 even if it has a flat shape. Meanwhile, if the metal fitting stopper 10 has a flat shape when the cover 140 of the fender management device 100 mounted on the flange coupling part 21 is positioned in the penetrating part 24, but exceeds the top of the stopper coupling part 22, the metal fitting stopper 10 causes interference with the cover 140 of the fender management device 100 when the metal fitting stopper 10 is mounted on the stopper coupling part 22. Accordingly, when the metal fitting stopper 10 is mounted on the stopper coupling part 22, it may have a curved surface that is curved outside the fender to prevent interference with the cover 140 of the fender management device 100. That is, the metal fitting stopper 10 may be fastened to the stopper coupling part 22 to seal the penetrating part 24, but may be manufactured in various forms to prevent interference with the cover 140 of the fender management device 100.

A fixing ring 11 may be formed outside the fender so that the pneumatic fender 1 is installed on a ship or quay wall by coupling members such as ropes, bands, and chains to the metal fitting stopper 10 coupled to the metal fitting housing 20.

The fender management device 100 mounted on the flange coupling part 21 of the metal fitting housing 20 may have a wireless transmitter 130 installed in the external direction of the fender based on the flange 110, and have a cover 140, in which a wireless transmitter accommodation part 145 is formed in order to protect the wireless transmitter 130, installed therein. Accordingly, when the flange 110 is fastened to the flange coupling part 21 and the fender management device 100 is mounted on the metal fitting housing 20, the wireless transmitter 130 is easily accessible from outside the fender, but it may be possible to prevent the wireless transmitter 130 from being directly exposed to the outside. In addition, since the wireless transmitter 130 may be immediately checked by removing the cover 140, ease of maintenance of the wireless transmitter 130 may be ensured

In addition, the fender management device 100 may have a position sensor 170 and an antenna 190 installed in the internal direction of the fender based on the flange 110. Accordingly, the transmission and reception of radio waves from the position sensor 170 and the antenna 190 may be disposed not in the direction of the metal fitting housing 20 made of metal and the metal fitting stopper 10 fastened to the metal fitting housing 20, but in the direction of the pneumatic fender 1 made of rubber. Accordingly, radio waves are not blocked by the metal fitting housing 20 and the metal fitting stopper 10 fastened to the metal fitting housing 20, and may be transmitted and received in the direction of the pneumatic fender 1 made of rubber.

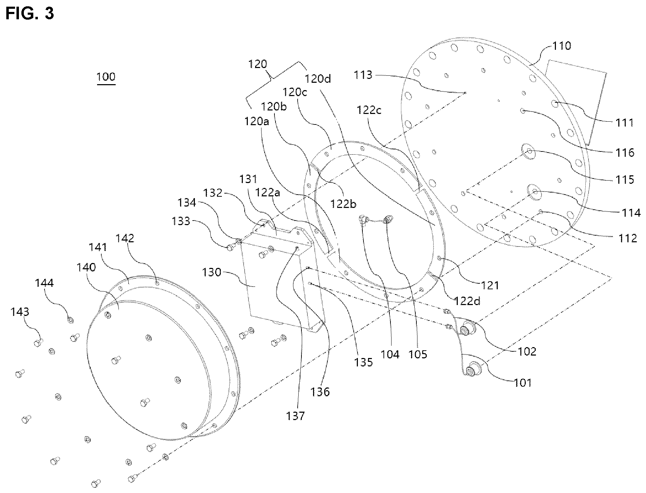

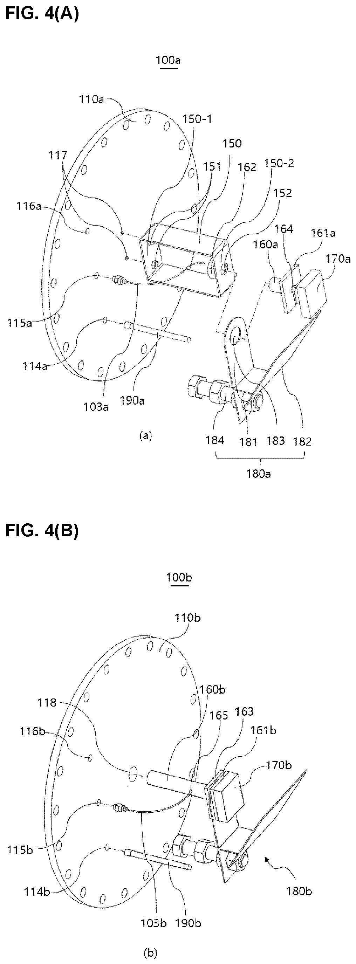

The fender management device 100 will be described in detail through FIGS. 3 and 4 described later.

FIG. 3 shows a front surface (external direction of the fender) of the fender management device according to an embodiment of the present disclosure.

Referring to FIG. 3, the fender management device 100 may include a flange 110, a wireless transmitter 130, and a cover 140.

The flange 110 is formed in a plate form so that it may be mounted on the flange coupling part (21 in FIG. 2) of the metal fitting housing (20 in FIG. 2). For example, it may be formed in a circular plate form, but is not limited thereto as long as it has a form corresponding to the flange coupling part (21 in FIG. 2) of the metal fitting housing (20 in FIG. 2). In addition, the flange 110 may include various materials such as metals, reinforced plastics, and fiber-reinforced plastics, but is not limited thereto.

Fixing bolt holes 111 for mounting the flange 110 on the flange coupling part (21 in FIG. 2) with fixing bolts may be formed in the outer edge of the flange 110 on the front surface of the flange 110.

Wireless transmitter fixing bolt holes 113 may be formed in the front surface of the flange 110 so that the wireless transmitter 130 may be mounted on the central portion of the flange 110.

A pressure sensor connection line 104, a pressure sensor 105, an antenna connection line 101, and a first position sensor connection line 102 are mounted on the front surface of the flange 110, but a pressure sensor connection port 116 formed by penetrating the rear surface of the flange 110, an antenna connection port 114 formed by penetrating the rear surface of the flange 110, and a position sensor-wireless transmitter connection port 115 formed by penetrating the rear surface of the flange 110 may be formed. Accordingly, the pressure sensor 105 mounted on the front surface of the flange 110 may measure the pressure formed on the rear surface of the flange 110, and it may be advantageous in replacing and maintain the pressure sensor 105 mounted on the front surface of the flange 110. In addition, the antenna connection line 101 may be connected to the antenna (190 in FIG. 4) mounted on the rear surface of the flange 110, and the first position sensor connection line 102 may be connected to the second position sensor connection line (103 in FIG. 4) mounted on the rear surface of the flange 110.

The cover fixing bolt holes 112 may be formed outside the wireless transmitter fixing bolt holes 113, the pressure sensor connection port 116, the antenna connection port 114, and the position sensor-wireless transmitter connection port 115 so that the cover 140 for covering and protecting the wireless transmitter 130, the pressure sensor connection line 104, the pressure sensor 105, the antenna connection line 101, and the first position sensor connection line 102 may be mounted on the front surface of the flange 110. At this time, the cover fixing bolt holes 112 may be formed at positions corresponding to the cover bolt holes 142 formed in the cover wing part 141.

The wireless transmitter 130 may have a wireless transmitter wing part 131, in which wireless transmitter bolt holes 132 are formed, formed on the outer edge thereof so that the wireless transmitter 130 may be fixed to the flange 110 with wireless transmitter fixing bolts 133 and wireless transmitter fixing washers 134. Accordingly, the wireless transmitter 130 may be easily mounted on and removed from the flange 110 using the wireless transmitter fixing bolts 133.

The wireless transmitter 130 may include a wireless transmitter pressure sensor terminal 137 to which the pressure sensor connection line 104 can be connected, a wireless transmitter communication terminal 135 to which the antenna connection line 101 can be connected, and a wireless transmitter position sensor terminal 136 to which the first position sensor connection line 102 can be connected. Accordingly, the wireless transmitter 130 can transmit the signal received through the wireless transmitter pressure sensor terminal 137 and the signal received through the wireless transmitter position sensor terminal 136 through the wireless transmitter communication terminal 135. In addition, since the wireless transmitter 130 includes a power supply device (not shown) inside, a power supply can be supplied to the pressure sensor 105 and the position sensor (170 in FIG. 4) through the wireless transmitter pressure sensor terminal 137 and the wireless transmitter position sensor terminal 136.

The pressure sensor connection line 104 may have a pressure sensor 105 mounted on one end thereof, and a terminal that can be fastened to the wireless transmitter pressure sensor terminal 137 may be formed on the other end thereof. At this time, the pressure sensor 105 may be formed to be mountable on the pressure sensor connection port 116 of the flange 110. Accordingly, the pressure sensor 105 mounted on the pressure sensor connection port 116 formed by penetrating the rear surface of the flange 110 can be connected to the wireless transmitter 130 through the pressure sensor connection line 104 so that the pressure measurement value in the space on the rear surface of the flange 110 can be detected by the pressure sensor 105 and transmitted to the wireless transmitter 130.

The antenna connection line 101 may have a terminal formed at one end thereof to be capable of being fastened to the antenna connection port 114 of the flange 110, and may have a terminal formed at the other end thereof to be capable of being fastened to the wireless transmitter communication terminal 135. Accordingly, the antenna (190 in FIG. 4) mounted on the rear surface of the flange 110 can be connected to the wireless transmitter 130 using the antenna connection line 101 so that the signal generated by the wireless transmitter 130 can be transmitted through the antenna (190 in FIG. 4).

The first position sensor connection line 102 may have a terminal formed at one end thereof to be capable of being fastened to the position sensor-wireless transmitter connection port 115 of the flange 110, and may have a terminal formed at the other end thereof to be capable of being fastened to the wireless transmitter position sensor terminal 136. Accordingly, the second position sensor connection line (103 in FIG. 4) connected to the position sensor (170 in FIG. 4) mounted on the rear surface of the flange 110 can be connected to the wireless transmitter 130 using the first position sensor connection line 102 so that the signal received from the position sensor (170 in FIG. 4) can be transmitted to the wireless transmitter 130.

In this way, since the antenna connection line 101 and the first position sensor connection line 102 are connected to the wireless transmitter 130 so that the position sensor (170 in FIG. 4) and the antenna (190 in FIG. 4) can be installed on the rear surface of the flange 110, and the wireless transmitter 130 can be installed on the front surface of the flange 110, convenience in replacement and maintenance of the wireless transmitter 130 can be ensured.

The cover 140 may serve to protect the wireless transmitter 130, the pressure sensor connection line 104, the pressure sensor 105, the antenna connection line 101, and the first position sensor connection line 102, and the wireless transmitter fixing bolt holes 113, the pressure sensor connection port 116, the antenna connection port 114, and the position sensor-wireless transmitter connection port 115 so that they are not exposed to the outside, and may serve to prevent moisture penetration and external impact. For example, the cover 140 may form a wireless transmitter accommodation part (145 in FIG. 2) capable of accommodating the wireless transmitter 130, the pressure sensor connection line 104, the pressure sensor 105, the antenna connection line 101, and the first position sensor connection line 102, and the wireless transmitter fixing bolt holes 113, the pressure sensor connection port 116, the antenna connection port 114, and the position sensor-wireless transmitter connection port 115.

In addition, the cover 140 may have the cover wing part 141, in which the cover bolt holes 142 are formed, formed at the bottom thereof so that the cover 140 can be fixed to the flange 110 using cover fixing bolts 143 and cover fixing washers 144. Accordingly, the cover 140 may be fixed to the flange 110 by coupling the cover fixing bolts 143 to the cover fixing bolt holes 112 of the flange 110.

The gasket 120 may be disposed between the cover 140 and the flange 110 when the cover 140 is coupled to the flange 110. The gasket 120 is manufactured in a form corresponding to the size of the cover wing part 141, and gasket bolt holes 121 may be formed at positions corresponding to the cover bolt holes 142. At this time, the gasket 120 may be manufactured of various materials such as rubber, plastics, and metals, but is not limited thereto. Accordingly, when the cover 140 is coupled to the flange 110, the gasket 120 is in close contact between the cover wing part 141 and the flange 110 so that the cover 140 can protect the wireless transmitter 130, the pressure sensor connection line 104, the pressure sensor 105, the antenna connection line 101, and the first position sensor connection line 102, and the wireless transmitter fixing bolt holes 113, the pressure sensor connection port 116, the antenna connection port 114, and the position sensor-wireless transmitter connection port 115 so that they are prevented from being exposed to the outside, and prevent penetration of moisture.

The gasket 120 may further have one or more gasket through-holes (not shown) formed therein. Accordingly, when the cover 140 is coupled to the flange 110, air inside and outside the cover 140 formed by the wireless transmitter accommodation part (145 in FIG. 2) of the cover 140 can move through the gasket through-holes (not shown) of the gasket 120 disposed between the cover 140 and the flange 110.

For example, the gasket through-holes (not shown) may have a moisture prevention member mounted thereon so that air can move through the moisture prevention member, but moisture is prevented from penetrating therethrough. For example, the moisture prevention member may include a water-repellent coated fabric, Goretex, a non-woven fabric with water-repellent performance, a functional film with water-repellent performance, etc., which allow air to pass therethrough but prevent moisture from passing therethrough, but is not limited thereto.

Accordingly, as the gasket through-holes (not shown) are formed between the cover 140 and the flange 110, the air pressure may be maintained the same due to the movement of air between the inside of the cover 140 and the outside of the cover 140 when the cover 140 and the flange 110 are coupled. Accordingly, when the inside of the cover 140 is sealed and the pressure rises, a malfunction in which the pressure inside the cover 140 is measured by the pressure sensor 105 can be prevented by using the gasket through-holes (not shown).

In addition, the gasket 120 may be divided into a plurality of parts. For example, the gasket 120 may be divided into four pieces of gaskets 120a, 120b, 120c, and 120d, but is not limited thereto.

The plurality of gaskets 120a, 120b, 120c, and 120d are disposed on the same plane, but gaps 122a, 122b, 122c, and 122d may be formed between each of the gaskets 120a, 120b, 120c, and 120d. For example, a gap 122a may be formed between one end of the gasket 120a and one end of the gasket 120b. Accordingly, when the cover 140 is coupled to the flange 110, air inside and outside the cover 140 formed by the wireless transmitter accommodating part (145 in FIG. 2) of the cover 140 can move through the gaps 122a, 122b, 122c, and 122d between the plurality of gaskets 120a, 120b, 120c, and 120d disposed between the cover 140 and the flange 110.

For example, the moisture prevention member may be mounted on the gaps 122a, 122b, 122c, and 122d to allow air to move, but to prevent moisture from penetrating therethrough. For example, the moisture prevention member may include a water-repellent coated fabric, Goretex, a non-woven fabric with water-repellent performance, a functional film with water-repellent performance, etc., which allow air to pass therethrough but prevent moisture from passing therethrough, but is not limited thereto.

Accordingly, as the gaps 122a, 122b, 122c, and 122d are formed between the cover 140 and the flange 110, the air pressure may be maintained the same due to the movement of air between the inside of the cover 140 and the outside of the cover 140 when the cover 140 and the flange 110 are coupled. Accordingly, when the inside of the cover 140 is sealed and the pressure rises, a malfunction in which the pressure inside the cover 140 is measured by the pressure sensor 105 can be prevented by using the gaps 122a, 122b, 122c, and 122d.

In another embodiment, the cover 140 may further have a cover through-hole (not shown) formed therein. Accordingly, when the cover 140 is coupled to the flange 110, air inside and outside the cover 140 formed by the wireless transmitter accommodation part (145 in FIG. 2) of the cover 140 can move through the cover through-hole (not shown).

For example, the cover through-hole (not shown) may have a moisture prevention member mounted thereon so that air can move through the moisture prevention member, but moisture is prevented from penetrating therethrough. For example, the moisture prevention member may include a water-repellent coated fabric, a non-woven fabric with water-repellent performance, a functional film with water-repellent performance, Goretex, etc., which allow air to pass therethrough but prevent moisture from passing therethrough, but is not limited thereto.

When the cover 140 and the flange 110 are coupled to the cover through-hole (not shown), the air pressure may be maintained the same due to the movement of air between the inside of the cover 140 and the outside of the cover 140.

Accordingly, the cover 140 can protect the wireless transmitter 130, the pressure sensor connection line 104, the pressure sensor 105, the antenna connection line 101, and the first position sensor connection line 102, and the wireless transmitter fixing bolt holes 113, the pressure sensor connection port 116, the antenna connection port 114, and the position sensor-wireless transmitter connection port 115 so that they are prevented from being exposed to the outside and moisture.

Accordingly, even if the main configurations such as the wireless transmitter 130, the pressure sensor connection line 104, the pressure sensor 105, the antenna connection line 101, and the first position sensor connection line 102 are disposed on the front surface of the flange 110, they can be protected from the outside, and it may be possible to easily replace and maintain main configurations such as the wireless transmitter 130, the pressure sensor connection line 104, the pressure sensor 105, the antenna connection line 101, and the first position sensor connection line 102 through removal of the cover 140.

FIG. 4 shows a rear surface (internal direction of the fender) of the fender management device according to each embodiment of the present disclosure.

Referring to FIGS. 4(A) and 4(B), the fender management devices 100a and 100b may include antennas 190a and 190b, position sensors 170a and 170b, and reflective members 180a and 180b.

The pressure sensor connection ports 116a and 116b are penetrated through the front surface of the flanges 110a and 110b so that the pressure sensor (105 in FIG. 3) mounted on the front surface of the flanges 110a and 110b may measure the pressure in the space on the rear surface of the flanges 110a and 110b.

The antenna connection ports 114a and 114b are penetrated through the front surface of the flanges 110a and 110b, and thus the antenna connection line (101 in FIG. 3) mounted on the front surface of the flanges 110a and 110b may be connected to the antennas 190a and 190b. Accordingly, the signal generated by the wireless transmitter (130 in FIG. 3) may be transmitted to the space on the rear surface of the flanges 110a and 110b through the antenna 190.

The position sensor-wireless transmitter connection port 115a and 115b are penetrated through the front surface of the flanges 110a and 110b, and thus may connect the first position sensor connection line (102 in FIG. 3) mounted on the front surface of the flanges 110a and 110b to the second position sensor connection lines 103a and 103b. At this time, one end of the second position sensor connection lines 103a and 103b may be formed to be fastened to the position sensor-wireless transmitter connection ports 115a and 115b, and the other end thereof may be formed to be connected to the position sensors 170a and 170b. Accordingly, the signal or position information received from the position sensors 170a and 170b may be transmitted to the wireless transmitter (130 in FIG. 3) through the second position sensor connection lines 103a and 103b and the first position sensor connection line (102 in FIG. 3).

Referring to FIG. 4(A), coupling of the shaft 160a, the position sensor 170a, and the reflective member 180a will be described in detail.

The bracket 150 may be formed in a rectangular frame form. At this time, a flange coupling surface 150-1 fixed to the flange 110a may be formed on one side surface of both facing side surfaces, and a shaft coupling surface 150-2 to which the shaft 160a is fixed may be formed on the other side surface thereof. For example, the flange coupling surface 150-1 may have bracket fixing bolts 151 mounted thereon. Accordingly, the flange coupling surface 150-1 may be fixed to the flange 110a by fastening the bracket fixing bolts 151 to the bracket fixing bolt holes 117 formed in the flange 110a.

In addition, the shaft coupling surface 150-2 may have a shaft fastener 152 formed therein. For example, the shaft 160a may pass through the shaft fastener 152 and be fixed with the shaft fixing bolt 162, and thus the shaft 160a may be fixed so that it does not come out of the shaft fastener 152. Accordingly, the shaft 160a may be firmly fixed to the bracket 150.

The shaft 160a may be formed in the form of a pipe having a shaft central through-hole 164 formed therein to penetrate the shaft 160a. At this time, one end of the shaft 160a may be formed to be fixed by the shaft fixing bolt 162 by penetrating the bracket 150, and a plate-shaped position sensor fixing plate 161a that expands flat outward based on the shaft central through-hole 164 may be formed so that the position sensor 170a may be attached to the other end of the shaft 160a. At this time, the other end of the shaft 160a where the position sensor fixing plate 161a is formed may be positioned outside the bracket 150. Accordingly, the shaft 160a may be fixed to the flange 110a by the bracket 150, and the position sensor 170a mounted on the position sensor fixing plate 161a may be stably fixed outside the bracket 150.

Since the second position sensor connection line 103 can pass through the shaft central through-hole 164, the second position sensor connection line 103 may be connected to the position sensor 170a mounted on the position sensor fixing plate 161a. Accordingly, the signal or position information received by the position sensor 170a can be transmitted using the second position sensor connection line 103.

The reflective member 180a has a center plate through-hole 183 formed in the upper end based on the plate-shaped center plate 181, and a weight 184 is mounted at the lower end. At this time, the center plate through-hole 183 may be formed to a size that allows the shaft 160a to pass through. For example, the shaft 160a is positioned by passing through the center plate through-hole 183, and the reflective member 180a may rotate about the shaft 160a as an axis. At this time, the center plate through-hole 183 may be processed or a rotation member may be further formed so that the reflective member 180a can rotate well about the shaft 160a as an axis. For example, a bearing (not shown) having a through-hole with a size allowing the shaft 160a to pass through is formed inside the center plate through-hole 183, and thus a rotation member may be formed to allow the reflective member 180a to rotate well around the shaft 160a, but is not limited thereto. Accordingly, when the shaft 160a passes through the center plate through-hole 183 of the reflective member 180a and is coupled to the shaft fastener 152 of the bracket 150, the center plate 181 of the reflective member 180a may be positioned between the shaft coupling surface 150-2 of the bracket 150 and the position sensor fixing plate 161a, and the reflective member 180a may rotate based on the shaft 160a.

A reflecting plate 182 may be mounted between the center plate through-hole 183 and the weight 184 of the reflective member 180a. At this time, the area of the reflecting plate 182 may be formed to be larger than that of the position sensor 170a.

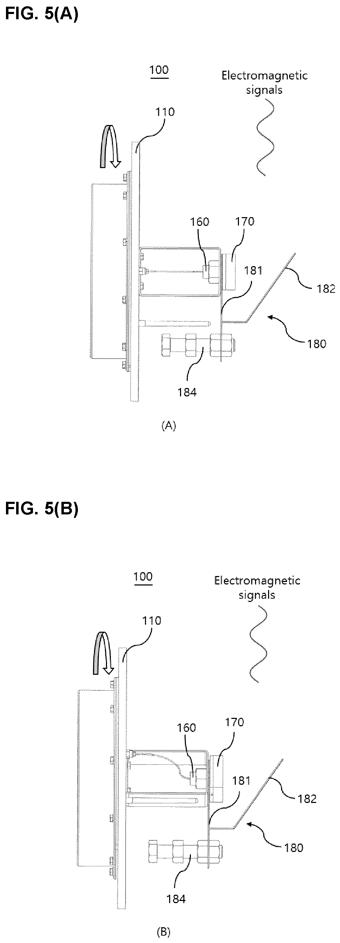

When the reflective member 180a is coupled to the shaft 160a, the reflecting plate 182 may have the inner surface thereof mounted in the direction of the position sensor 170a mounted on the shaft 160a. For example, the reflecting plate 182 may form a predetermined angle with the center plate 181 and may be mounted to be opened in the direction of the center plate through-hole 183. Accordingly, a wedge-shaped space is formed between the reflecting plate 182 and the center plate 181, and the inner surface of the reflecting plate 182 faces the position sensor 170a. Accordingly, radio waves and electromagnetic signals coming down from the air may be reflected on the inner surface of the reflecting plate 182 and transmitted in the direction of the position sensor 170a. In addition, since the reflective member 180a can freely rotate around the shaft 160a as an axis even if the shaft 160a rotates so that the reflecting plate 182 can look into the air, the radio waves and electromagnetic signals may be reflected on the inner surface of the reflecting plate 182 and transmitted in the direction of the position sensor 170a. This is explained in detail through FIG. 5.

Referring to FIG. 4(B), another embodiment of coupling of the shaft 160b, the position sensor 170a, and the reflective member 180b will be described in detail.

The shaft 160b may be formed in the form of a pipe in which a shaft central through-hole penetrating through the shaft 160b is formed. At this time, one end of the shaft 160b may be fastened to and fixed to the shaft fixing hole 118 formed in the central portion of the flange 110b. In addition, a plate-shaped position sensor fixing plate 161b that expands flat outward based on the shaft central through-hole may be formed so that the position sensor 170a may be attached to the other end of the shaft 160b.

The shaft 160b may be coupled to the reflective member 180b by passing through a center plate through-hole formed in the center plate of the reflective member 180b before fastening the shaft 160b to the shaft fixing hole 118. At this time, the reflective member 180b may have the same structure as that of the reflective member 180a described in FIG. 4(A). Accordingly, the reflective member 180b may rotate around the shaft 160b fixed to the flange 110b, as an axis.

In addition, the shaft 160b may have a fixing member 163 mounted thereon so that the reflective member 180b can be positioned near the position sensor fixing plate 161b without moving along the shaft 160b after being coupled to the shaft 160b. For example, when the fixing member 163 is mounted on the shaft 160b if the shaft 160b is coupled by passing through the center plate through-hole of the reflective member 180b, and the reflective member 180b is positioned near the position sensor fixing plate 161b, the reflective member 180b is positioned between the position sensor fixing plate 161b and the fixing plate 163. At this time, the fixing member 163 prevents the reflective member 180b from moving along the shaft 160b, and may have various shapes such as a plate shape and a pin shape that can be coupled to the shaft 160b, but is not limited thereto.

Accordingly, the reflective member 180b can rotate around the shaft 160b fastened to the flange 110b, as an axis, but may be fixed to rotate only in the space between the position sensor fixing plate 161b and the fixing plate 163.

The shaft 160b may have a connection line through-hole 165 formed in the side surface thereof in order to connect the second position sensor connection line 103b to the position sensor 170b through the shaft central through-hole penetrating the shaft 160b. Accordingly, the second position sensor connection line 103b may flow into the shaft central through-hole through the connection line through-hole 165, and may be connected to the position sensor 170b mounted on the position sensor fixing plate 161b through the shaft central through-hole.

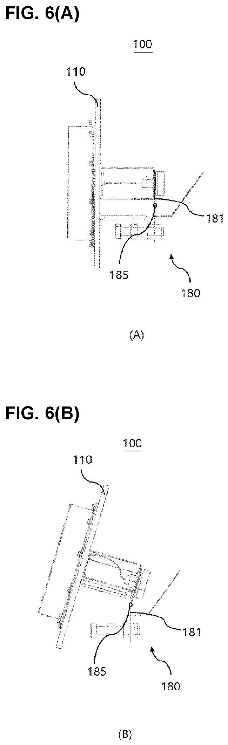

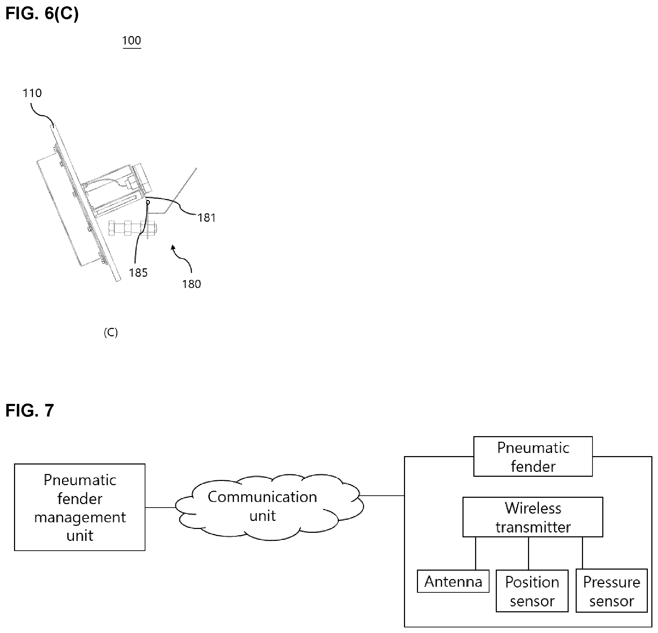

FIGS. 5 and 6 show a fender management device according to each embodiment of the present disclosure.

Referring to FIG. 5, the reflective member 180 may maintain a constant position without being affected by the rotation of the flange 110.

The fender management device 100 is coupled to a fender metal fitting of a pneumatic fender with a flange 110. Accordingly, when the pneumatic fender rotates, the fender management device 100 also rotates together. For example, as the flange 110 rotates as shown in FIG. 5(A) to FIG. 5(B), parts coupled to the flange 110 also rotate.

If all parts of the fender management device 100 rotate together according to the rotation of the pneumatic fender, the position sensor 170 fixed to the fender management device 100 also rotates. At this time, the position sensor 170 may be mounted in the center of the fender management device 100 so that the position sensor 170 can look in one direction regardless of the rotation of the fender management device 100. However, when the position sensor 170 is mounted in the center of the fender management device 100, the position sensor 170 cannot effectively receive electromagnetic signals coming down from the air. Accordingly, the present disclosure uses a reflective member 180 that is fastened to the shaft 160, but can freely rotate around the shaft 160 as an axis so that the reflecting plate 182 is constantly directed in the air direction without being affected by the rotation of the flange 110, and uses the reflection angle so that the electromagnetic signals coming down from the air can be effectively transmitted to the position sensor 170.

It has been explained through FIG. 4 that the reflective member 180 including the reflecting plate 182 can rotate based on the shaft 160. At this time, the weight 184 mounted on the bottom of the center plate 181 of the reflective member 180 may be directed in a downward direction due to gravity, and the inner surface of the reflecting plate 182 may be directed in the air direction. Accordingly, since the reflective member 180 is directed in the same direction due to the gravity acting on the weight 184 even if the flange 110 rotates, and thus the reflecting plate 182 mounted on the reflective member 180 may be directed in the air direction, the reflecting plate 182 can effectively reflect electromagnetic signals.

Referring to FIG. 6, the reflective member 180 may maintain a constant position without being affected by the tilt of the flange 110.

The fender management device 100 is coupled to the fender metal fitting of the pneumatic fender with a flange 110. Accordingly, when the pneumatic fender is tilted, the fender management device 100 is also tilted together. For example, when the flange 110 is tilted as shown in FIG. 6(A) to FIG. 6(B) or FIG. 6(C), parts coupled to the flange 110 are also tilted.

If all parts of the fender management device 100 are tilted together according to the tilt of the pneumatic fender, the position sensor 170 fixed to the fender management device 100 cannot effectively receive electromagnetic signals coming down from the air. Accordingly, it has been improved so that the reflecting plate 182 is constantly directed in the air direction without being affected by the tilt of the flange 110 by adding a hinge 185 to the center plate 181 of the reflective member 180.

The center plate 181 of the reflective member 180 including the reflecting plate 182 may have a hinge 185 formed between a portion fastened to the shaft 160 and a portion where the reflecting plate 182 is formed. Accordingly, the center plate 181 may be folded at a predetermined angle around the hinge 185. At this time, the weight 184 mounted on the bottom of the center plate 181 is directed downward by gravity, and thus the center plate 181 on which the reflecting plate 182, which is a lower part of the hinge 185, is mounted, is constantly directed downward by gravity. Accordingly, the reflecting plate 182 may be equally directed in the air direction due to the gravity acting on the weight 184 even if the flange 110 is tilted, and thus it may effectively reflect electromagnetic signals.

FIG. 7 is a mimetic diagram showing a pneumatic fender management system according to an embodiment of the present disclosure.

Referring to FIG. 7, the pneumatic fender management system includes a pneumatic fender, a pneumatic fender management unit, and a communication unit.

A plurality of pneumatic fenders may be installed on the wall surface of the quay wall or the side of the ship to prevent damage to the hull and quay wall when berthing or approaching a ship. At this time, the range where the pneumatic fender is installed may be very widened depending on the size of the hull or the size of the quay wall. In addition, the pneumatic fender should be fixed to an appropriate position in order to prevent damage to the hull and quay wall, and should maintain an appropriate pressure in order to play a buffering role. Therefore, the pneumatic fender requires a system that can manage the pneumatic fender.

The pneumatic fender of the pneumatic fender management system may generate management information. At this time, the management information may be various information such as position information, pressure information, and temperature information, but is not limited thereto. For example, the management information may be position information generated using a position sensor. In addition, it may be pressure information generated using a pressure sensor. At this time, the position sensor may include a GPS sensor, but is not limited thereto. In addition, the pressure sensor may include a strain gauge pressure sensor, a capacitive pressure sensor, a potentiometric pressure sensor, and a piezoelectric pressure sensor, but is not limited thereto. Accordingly, it may be possible to check whether the pneumatic fender is at an appropriate position or not and whether the pneumatic fender forms an appropriate pressure or not using the management information.

The pneumatic fender may include a wireless transmitter that receives the management information generated, for example, the position information generated by the position sensor and/or the pressure information generated by the pressure sensor. Accordingly, the wireless transmitter may receive the management information including the position information and/or the pressure information.

The wireless transmitter may convert the management information into one dataset formed based on generation time. In addition, the wireless transmitter may generate a dataset by including the unique number of the pneumatic fender in the dataset. Accordingly, it is possible to specify which pneumatic fender dataset the dataset is.

For example, if A $(x_1, y_1)$ position information is generated by the position sensor and B $(P_1)$ pressure information is generated by the pressure sensor at a specific time $T_1$, metadata for the specific time $T_1$ is included, and thus the A $(x_1, y_1)$ position information and the B $(P_1)$ pressure information may be transmitted to the wireless transmitter at the same time, and the wireless transmitter may combine the A $(x_1, y_1)$ position information and the B $(P_1)$ pressure information based on time $T_1$ and generate a dataset. At this time, the unique number F(1) of the pneumatic fender may be included in the dataset. Accordingly, the wireless transmitter may continuously generate datasets based on time, for example, as follows.

$T_1$: A $(x_1, y_1)$, B $(P_1)$, F(1)
$T_2$: A $(x_2, y_2)$, B $(P_2)$, F(1)
$T_3$: A $(x_3, y_3)$, B $(P_3)$, F(1)

The wireless transmitter may transmit the dataset in a wireless communication format. For example, it may be transmitted in a wireless communication format using an antenna connected to the wireless transmitter.

In order to manage the pneumatic fender, the pneumatic fender management system may include a pneumatic fender management unit, and include a communication unit connecting the pneumatic fender and the pneumatic fender management unit. At this time, the communication unit may have wireless communication technology applied thereto. For example, the communication unit may have low-power long-distance communication technology applied thereto, and may have wireless communication technology using LoRa, LoRaWAN, or RF applied thereto, but is not limited thereto. Accordingly, the pneumatic fender management unit may receive the dataset transmitted from the wireless transmitter through the communication unit. Accordingly, the status of the fender may be checked and managed through the pneumatic fender management unit.

Since errors and deviations of the management information are reflected as they are although the pneumatic fender management unit may receive the dataset through the communication unit, and use the management information of the dataset in the pneumatic fender management unit as it is, it may interfere with the management of the pneumatic fender if large noise is temporarily generated. Accordingly, it is desirable to correct the management information of the dataset so that errors and deviations are reduced, data variance is stabilized, and values in which abnormally large errors occur are corrected by correcting the management information, for example, the position information and the pressure information. At this time, the correction method may include at least one of the simple moving average, exponential moving average, weighted moving average, geometric moving average, and harmonic moving average methods.

Specifically, continuous average values of measurement values, which are a type of exponential moving average, may be applied. For example, if it is the first value $(x_1, y_1)$, second value $(x_2, y_2)$, third value $(x_3, y_3)$, and nth value $(x_n, y_n)$ of position information (where n is a natural number 1 or more, and the larger the value of n, the more recent the measurement value), the position information $(D_{1x}, D_{1y})$ of the first dataset corrected by the pneumatic fender management unit is as follows.

$$D_{1x} = \frac{(x_1 + x_2)}{2} , D_{1y} = \frac{(y_1 + y_2)}{2}$$

Afterwards, the position information $(D_{2x}, D_{2y})$ of the second dataset corrected by the pneumatic fender management unit is as follows.

$$D_{2x} = \frac{\left(\frac{(x_1 + x_2)}{2} + x_3\right)}{2} , D_{2y} = \frac{\left(\frac{(y_1 + y_2)}{2} + y_3\right)}{2}$$

This is written as follows.

$$D_{2x} = \left(\frac{x_1}{4} + \frac{x_2}{4} + \frac{x_3}{2}\right), D_{2y} = \left(\frac{x_1}{4} + \frac{x_2}{4} + \frac{x_3}{2}\right)$$

This is rewritten as follows.

$$D_{2x} = \frac{(D_{1x} + x_3)}{2} , D_{2y} = \frac{(D_{1y} + y_3)}{2}$$

Afterwards, the position information $(D_{nx}, D_{ny})$ of the nth dataset corrected by the pneumatic fender management unit is as follows.

$$D_{nx} = \frac{(D_{(n-1)x} + x_{(n+1)})}{2} , D_{ny} = \frac{(D_{(n-1)y} + y_{(n+1)})}{2}$$

This is written as follows:

$$D_{nx} = \left(\frac{x_1}{2^n} + \frac{x_2}{2^n} + \frac{x_3}{2^{(n-1)}} + \cdots + \frac{x_{(n+1)}}{2}\right),$$

,

$$D_{ny} = \left( \frac{y_1}{2^n} + \frac{y_2}{2^n} + \frac{y_3}{2^{(n-1)}} + \cdots + \frac{y_{(n+1)}}{2} \right),$$

Here, since the value of the denominator increases exponentially except for the last term, it may be assumed that there is little effect on the values of $D_{nx}$ and $D_{ny}$. For example, when the value of n is 5, the size of the denominator of the first two measurement values, $\left( \frac{x_1}{2^5} + \frac{x_2}{2^5} \right)$ and $\left( \frac{y_1}{2^5} + \frac{y_2}{2^5} \right)$, is 32, it can be seen that the effect on the values of $D_{5x}$ and $D_{5y}$ is greatly reduced. If this is expressed as a weight, the weight in the position information decreases in the order of about 50%, 25%, 13%, 6%, and 3%, starting from the latest position information.

Accordingly, a high weight is given to position information that is close to the current position information, making it possible to confirm the position of the pneumatic fender as close to the current time, and when excessive errors and deviations occur due to some trends in past position information being reflected, they may be corrected. This can also be applied to other management information such as pressure information.

This can be expressed as a general formula for management information (x) as follows (n = a natural number of 1 or more, and the larger the value of n, the more recent the measurement value).

$$D_{nx} = \left( \frac{1}{2^n} \right) x_1 + \frac{1}{2} \sum_{i=0}^{n-1} \left( \frac{1}{2} \right)^i x_{(n-i+1)}$$

Further, a specific number of data, which is a type of simple moving average, may be selected to obtain the average, and the relevant value may be applied as position data. For example, if it is the first position information $(x_1, y_1)$, the second position information $(x_2, y_2)$, the third position information $(x_3, y_3)$, and the nth position information $(x_n, y_n)$ (where n is a natural number of 1 or more, and the larger the value of n, the more recent the measurement value), when four values are selected sequentially to apply the arithmetic mean value, the first dataset $(D_{1x}, D_{1y})$ corrected by the pneumatic fender management unit is as follows.

$$D_{1x} = \frac{(x_1 + x_2 + x_3 + x_4)}{4}, D_{1y} = \frac{(y_1 + y_2 + y_3 + y_4)}{4}$$

Afterwards, the second dataset $(D_{2x}, D_{2y})$ corrected by the pneumatic fender management unit is as follows.

$$D_{2x} = \frac{(x_2 + x_3 + x_4 + x_5)}{4}, D_{2y} = \frac{(y_2 + y_3 + y_4 + y_5)}{4}$$

Afterwards, the nth dataset $(D_{nx}, D_{ny})$ corrected by the pneumatic fender management unit is as follows.

$$D_{nx} = \frac{(x_n + x_{n+1} + x_{n+2} + x_{n+3})}{4}, D_{ny} = \frac{(y_n + y_{n+1} + y_{n+2} + y_{n+3})}{4}$$

Accordingly, position information nearby the latest position information may be used to stabilize variance and correct values in which errors abnormally occur. This can also be applied to other management information such as pressure information.

However, when using such a method, there is a disadvantage in that if the dataset is composed of less than three position information, the parameters are reduced so that the effect of correcting values with abnormally large errors is weakened. For example, since the proportions are each 50% when using two position information, there is a disadvantage in that it is excessively reflected on the dataset if one position information has an abnormal value.

Since past position information is excessively reflected if the dataset is composed of more than five position information, there may be a disadvantage in that changes in the current position information is not immediately reflected. For example, since the proportions are each 16.7% when using six position information, there is a disadvantage in that the proportion of the latest position information is excessively lowered, making it difficult to reflect the latest trends.

In this way, when correcting the dataset, the pneumatic fender management unit may reduce errors and deviations in the management information, stabilize variation, and correct values in which abnormally large errors occur by applying various correction methods.

As described above, the specific description of the present disclosure has been made by the embodiments with reference to the accompanying drawings, but since the above-described embodiments have only been explained by referring to preferred examples of the present disclosure, it should not be understood that the present disclosure is limited to the above-described embodiments, and the scope of rights of the present disclosure should be understood as the claims to be described later thereof.

For example, drawings schematically show each of components as the main component to aid understanding, and the thickness, length, number, etc. of each component shown may differ from the actual ones during the drawing process. In addition, the materials, shapes, dimensions, etc. of each component shown in the above embodiments are only examples and are not particularly limited, and various changes are possible without substantially departing from the effect of the present invention, that is defined by the appended claims.

[Explanation of reference numerals]

1: Pneumatic fender
2a, 2b: Fender metal fitting
10: Metal fitting stopper
11: Fixing ring
20: Metal fitting housing
21: Flange coupling part
22: Stopper coupling part
23: Fender fixing part
24: Penetrating part
100: Fender management device
101: Antenna connection line
102: First position sensor connection line
103a, 103b: Second position sensor connection line
104: Pressure sensor connection line
105: Pressure sensor
110, 110a, 110b: Flange
111: Flange fixing bolt hole
112: Cover fixing bolt hole
113: Wireless transmitter fixing bolt hole
114: Antenna connection port
115: Position sensor-wireless transmitter connection port
116: Pressure sensor connection port
117: Bracket fixing bolt hole
118: Shaft fixing hole
120: Gasket
121: Gasket bolt hole
122: Gap
130: Wireless transmitter
131: Wireless transmitter wing part
132: Wireless transmitter bolt hole
133: Wireless transmitter fixing bolt
134: Wireless transmitter fixing washer
135: Wireless transmitter communication terminal
136: Wireless transmitter position sensor terminal
137: Wireless transmitter pressure sensor terminal
140: Cover
141: Cover wing part
142: Cover bolt hole
143: Cover fixing bolt
144: Cover fixing washer
145: Wireless transmitter accommodation part

150: Bracket
150-1: Flange coupling surface
150-2: Shaft coupling surface
151: Bracket fixing bolt
152: Shaft fastener
160a, 160b: Shaft
161a, 161b: Position sensor mounting plate
162: Shaft fixing bolt
163: Fixing member
164: Shaft central through-hole
165: Connection line through-hole
170, 170a, 170b: Position sensor
180: Reflective member
181: Center plate
182: Reflecting plate
183: Center plate through-hole
184: Weight
185: Hinge
190: Antenna

**Claims**

1. A pneumatic fender (1) comprising:

   a ring-shaped metal fitting housing (20) that is mounted on at least one end of a pneumatic fender and forms a penetrating part (24) penetrating the inside and outside of the pneumatic fender;
   a plate-shaped flange (110) that is mounted on the penetrating part to block the inside and outside of the pneumatic fender;
   a wireless transmitter (130) that is mounted on the front surface of the flange defining a surface formed in the external direction of the pneumatic fender;
   a cover (140) that is mounted on the front surface of the flange to protect a region where the wireless transmitter is mounted;
   a shaft (160a) that has a predetermined length and is mounted on the rear surface of the flange defining a surface formed in the internal direction of the pneumatic fender;
   a position sensor (170) that is mounted on the internal direction end of the shaft and generates position information of the pneumatic fender; and
   a reflective member (180a) that is connected to the shaft between the flange and the position sensor and is rotatable around the shaft,
   wherein the accuracy of generating position information of the pneumatic fender using the position sensor is greatly improved by ensuring that the position of the reflective member is fixed even when the pneumatic fender is rotated.

2. The pneumatic fender of claim 1, further comprising a pressure sensor (105) mounted on a region protected by the cover on the front surface of the flange, wherein the flange is provided with a pressure measuring port formed by penetrating the flange so that the pressure sensor measures the pressure in the space on the rear surface of the flange, but the pressure measuring port is provided in a region protected by the cover so that the pressure sensor is protected from moisture inflow while facilitating maintenance of the pressure sensor.

3. The pneumatic fender of claim 1, wherein the flange is provided with a position sensor-wireless transmitter connection port (115) formed by penetrating the flange so that the signal received from the position sensor is transmitted to the wireless transmitter, but the position sensor-wireless transmitter connection port is provided in a region protected by the cover so that the position sensor is protected from moisture inflow while preventing electromagnetic signals transmitted to the position sensor from being interfered with by the cover.

4. The pneumatic fender of claim 1, further comprising an antenna (190) mounted on the rear surface of the flange defining a surface formed in the internal direction of the pneumatic fender, wherein the flange is provided with an antenna connection port formed by penetrating the flange to transmit the signal generated by the wireless transmitter to the antenna, but the antenna connection port is provided in a region protected by the cover so that the position sensor is protected from moisture inflow while preventing electromagnetic signals transmitted to the antenna from being interfered with by the cover.

5. The pneumatic fender of claim 1, wherein the reflective member comprises: a center plate including at least one plate; a weight that is installed at a lower portion of the center plate and applies gravity to the center plate in one direction; and a reflecting plate that is installed to be connected to the center plate to reflect electromagnetic signals transmitted to the position sensor, a center plate through-hole through which the shaft passes is formed in the center plate so that the center plate rotates around the shaft, and even when the pneumatic fender rotates due to the gravitational action in one direction by the weight, it is ensured that the reflecting plate is positioned in a certain direction based on the flange, thereby greatly improving the accuracy of generating position information of the pneumatic fender using the position sensor even when the pneumatic fender is rotated.

6. A pneumatic fender management system managing the pneumatic fender according to any one of claims 1 to 5, wherein the pneumatic fender management system comprises a pneumatic fender management unit and a communication unit, and transfers management information including position information or pressure information of the pneumatic fender, which is generated, to the wireless transmitter, and the wireless transmitter converts the management information into one dataset formed based on the generation time along with the unique number of the pneumatic fender and transfers it to the pneumatic fender management unit.

7. The pneumatic fender management system of claim 6, wherein the pneumatic fender management unit corrects the management information of the received dataset by applying at least one of the simple moving average, exponential moving average, weighted moving average, geometric moving average, and harmonic moving average methods.

## Patentansprüche

1. Pneumatischer Fender (1), aufweisend:

   ein ringförmiges Metallbeschlaggehäuse (20), das an mindestens einem Ende eines pneumatischen Fenders montiert ist und einen Durchdringungsteil (24) bildet, der das Innere und das Äußere des pneumatischen Fenders durchdringt,
   einen plattenförmigen Flansch (110), der an dem Durchdringungsteil montiert ist, um das Innere und Äußere des pneumatischen Fenders zu blockieren,
   einen Drahtlos-Sender (130), der an der Frontfläche des Flansches montiert ist, die eine in der Außenrichtung des pneumatischen Fenders ausgebildete Fläche definiert,
   eine Abdeckung (140), die an der Frontfläche des Flansches montiert ist, um einen Bereich zu schützen, wo der Drahtlos-Sender montiert ist,
   einen Schaft (160a), der eine vorbestimmte Länge hat und an der rückwärtigen Fläche des Flansches montiert ist, die eine in der Innenrichtung des pneumatischen Fenders ausgebildete Fläche definiert,
   einen Positionssensor (170), der am Innenrichtungsende des Schafts montiert ist und Positionsinformationen des pneumatischen Fenders erzeugt, und
   ein reflektierendes Element (180a), das mit dem Schaft zwischen dem Flansch und dem Positionssensor verbunden ist und um den Schaft drehbar ist,
   wobei die Genauigkeit der Erzeugung von Positionsinformationen des pneumatischen Fenders mittels des Positionssensors erheblich verbessert ist, indem sichergestellt wird, dass die Position des reflektierenden Elements auch dann fixiert ist, wenn der pneumatische Fender gedreht wird.

2. Pneumatischer Fender gemäß Anspruch 1, ferner aufweisend einen Drucksensor (105), der an einem durch die Abdeckung geschützten Bereich an der Frontfläche des Flansches montiert ist, wobei der Flansch mit einer Druckmessöffnung bereitgestellt ist, die durch Durchdringen des Flansches ausgebildet ist, so dass der Drucksensor den Druck im Raum an der rückwärtigen Fläche des Flansches misst, wobei die Druckmessöffnung jedoch in einem durch die Abdeckung geschützten Bereich vorgesehen ist, so dass der Drucksensor vor einem Eindringen von Feuchtigkeit geschützt ist und gleichzeitig eine Wartung des Drucksensors erleichtert ist.

3. Pneumatischer Fender gemäß Anspruch 1, wobei der Flansch mit einem Positionssensor-Drahtlos-Sender-Verbindungsanschluss (115) versehen ist, der durch Durchdringen des Flansches ausgebildet ist, so dass das vom Positionssensor empfangene Signal an den Drahtlos-Sender gesendet wird, wobei jedoch der Positionssensor-Drahtlos-Sender-Verbindungsanschluss in einem durch die Abdeckung geschützten Bereich vorgesehen ist, so dass der Positionssensor vor einem Eindringen von Feuchtigkeit geschützt ist und gleichzeitig verhindert wird, dass an den Positionssensor gesendete elektromagnetische Signale durch die Abdeckung gestört werden.

4. Pneumatischer Fender gemäß Anspruch 1, ferner aufweisend eine Antenne (190), die an der rückwärtigen Fläche des Flansches montiert ist, die eine in der Innenrichtung des pneumatischen Fenders ausgebildete Fläche definiert, wobei der Flansch mit einem Antennenverbindungsanschluss versehen ist, der durch Durchdringen des Flansches ausgebildet ist, um das vom Drahtlos-Sender erzeugte Signal an die Antenne zu senden, wobei der Antennenverbindungsanschluss jedoch in einem durch die Abdeckung geschützten Bereich vorgesehen ist, so dass der Positionssensor vor einem Eindringen von Feuchtigkeit geschützt ist und gleichzeitig verhindert wird, dass an die Antenne gesendete elektromagnetische Signale durch die Abdeckung gestört werden.

5. Pneumatischer Fender gemäß Anspruch 1, wobei das reflektierende Element aufweist: eine Mittelplatte, die mindestens eine Platte aufweist, ein Gewicht, das an einem unteren Abschnitt der Mittelplatte installiert ist und in einer Richtung Schwerkraft auf die Mittelplatte ausübt, und eine reflektierende Platte, die so installiert ist, dass sie mit der Mittelplatte verbunden ist, um an den Positionssensor gesendete elektromagnetische Signale zu reflektieren, wobei in der Mittelplatte ein Mittelplatten-Durchgangsloch ausgebildet ist, durch das der Schaft hindurchgeht, so dass sich die Mittelplatte um den Schaft dreht, und selbst wenn sich der pneumatische Fender aufgrund der Schwerkraftwirkung durch das Gewicht in einer Richtung dreht, sichergestellt ist, dass die reflektierende Platte in einer bestimmten Richtung basierend auf dem Flansch positioniert ist, wodurch die Genauigkeit der Erzeugung von Positionsinformationen des pneumatischen Fenders mittels des Positionssensors selbst dann erheblich verbessert ist, wenn der pneumatische Fender gedreht wird.

6. Pneumatischer-Fender-Verwaltungssystem, das den pneumatischen Fender gemäß irgendeinem der Ansprüche 1 bis 5 verwaltet, wobei das Pneumatischer-Fender-Verwaltungssystem eine Pneumatischer-Fender-Verwaltungseinheit und eine Kommunikationseinheit aufweist und Verwaltungsinformationen, einschließlich Positionsinformationen oder Druckinformationen des pneumatischen Fenders, die erzeugt werden, an den Drahtlos-Sender überträgt, und der Drahtlos-Sender die Verwaltungsinformationen in einen Datensatz umwandelt, der basierend auf der Erzeugungszeit zusammen mit der eindeutigen Nummer des pneumatischen Fenders gebildet wird, und diesen an die Pneumatischer-Fender-Verwaltungseinheit überträgt.

7. Pneumatischer-Fender-Verwaltungssystem gemäß Anspruch 6, wobei die Pneumatischer-Fender-Verwaltungseinheit die Verwaltungsinformationen des empfangenen Datensatzes korrigiert, durch Anwenden von mindestens einem von dem Einfacher-gleitender-Durchschnittswert-, Exponentiellergleitender-Durchschnittswert-, Gewichteter-gleitender-Durchschnittswert-, Geometrischer-gleitender-Durchschnittswert- und dem Harmonischer-gleitender-Durchschnittswert-Verfahren.

## Revendications

1. Pare-battage pneumatique (1) comprenant :

un boîtier de fixation métallique en forme d'anneau (20) qui est monté sur au moins une extrémité d'un pare-battage pneumatique et forme une partie pénétrante (24) pénétrant dans l'intérieur et l'extérieur du pare-battage pneumatique ;
une bride en forme de plaque (110) qui est montée sur la partie pénétrante pour bloquer l'intérieur et l'extérieur du pare-battage pneumatique ;
un émetteur sans fil (130) monté sur la surface avant de la bride définissant une surface formée dans la direction externe du pare-battage pneumatique ;
un couvercle (140) monté sur la surface avant de la bride pour protéger une région où l'émetteur sans fil est monté ;
un arbre (160a) qui a une longueur prédéterminée et qui est monté sur la surface arrière de la bride définissant une surface formée dans la direction interne du pare-battage pneumatique ;
un capteur de position (170) qui est monté sur l'extrémité de direction interne de l'arbre et qui génère des informations de position du pare-battage pneumatique ; et
un élément réfléchissant (180a) qui est relié à l'arbre entre la bride et le capteur de position et qui peut tourner autour de l'arbre,
dans lequel la précision de génération d'informations de position du pare-battage pneumatique en utilisant le capteur de position est grandement améliorée en garantissant que la position de l'élément réfléchissant est fixe même lorsque le pare-battage pneumatique est en rotation.

2.  Pare-battage pneumatique selon la revendication 1, comprenant en outre un capteur de pression (105) monté sur une région protégée par le couvercle sur la surface avant de la bride, dans lequel la bride est pourvue d'un orifice de mesure de pression formé en pénétrant dans la bride de sorte que le capteur de pression mesure la pression dans l'espace sur la surface arrière de la bride, mais l'orifice de mesure de pression est prévu dans une région protégée par le couvercle de manière à ce que le capteur de pression soit protégé contre une infiltration d'humidité tout en facilitant l'entretien du capteur de pression.

3.  Pare-battage pneumatique selon la revendication 1, dans lequel la bride est pourvue d'un orifice de connexion d'émetteur sans fil et de capteur de position (115) formé en pénétrant dans la bride de manière à ce que le signal reçu du capteur de position soit transmis à l'émetteur sans fil, mais l'orifice de connexion d'émetteur sans fil et de capteur de position est prévu dans une zone protégée par le couvercle, de sorte que le capteur de position est protégé contre une infiltration d'humidité tout en empêchant que des signaux électromagnétiques transmis au capteur de position ne soient perturbés par le couvercle.

4.  Pare-battage pneumatique selon la revendication 1, comprenant en outre une antenne (190) montée sur la surface arrière de la bride définissant une surface formée dans la direction interne du pare-battage pneumatique, dans lequel la bride est pourvue d'un orifice de connexion d'antenne formé en pénétrant dans la bride pour transmettre le signal généré par l'émetteur sans fil à l'antenne, mais l'orifice de connexion d'antenne est prévu dans une région protégée par le couvercle de sorte que le capteur de position est protégé contre une infiltration d'humidité tout en empêchant des signaux électromagnétiques transmis à l'antenne d'être perturbés par le couvercle.

5.  Pare-battage pneumatique selon la revendication 1, dans lequel l'élément réfléchissant comprend : une plaque centrale comprenant au moins une plaque ; un poids qui est installé dans une partie inférieure de la plaque centrale et qui applique une force de gravité à la plaque centrale dans une direction ; et une plaque réfléchissante qui est installée de manière à être reliée à la plaque centrale afin de réfléchir des signaux électromagnétiques transmis au capteur de position, un trou traversant de plaque centrale à travers lequel passe l'arbre est formé dans la plaque centrale de manière à ce que la plaque centrale tourne autour de l'arbre, et même lorsque le pare-battage pneumatique tourne en raison de l'action gravitationnelle dans une direction par le poids, il est garanti que la plaque réfléchissante est positionnée dans une certaine direction sur la base de la bride, ce qui améliore considérablement la précision de la génération d'informations de position du pare-battage pneumatique en utilisant le capteur de position, même lorsque le pare-battage pneumatique est en rotation.

6.  Système de gestion de pare-battage pneumatique gérant le pare-battage pneumatique selon l'une quelconque des revendications 1 à 5, dans lequel le système de gestion de pare-battage pneumatique comprend une unité de gestion de pare-battage pneumatique et une unité de communication, et transfère des informations de gestion comprenant des informations de position ou des informations de pression du pare-battage pneumatique, qui sont générées, à l'émetteur sans fil, et l'émetteur sans fil convertit les informations de gestion en un ensemble de données formé sur la base du temps de génération ainsi que du numéro unique du pare-battage pneumatique et le transfère à l'unité de gestion de pare-battage pneumatique.

7.  Système de gestion de pare-battage pneumatique selon la revendication 6, dans lequel l'unité de gestion de pare-battage pneumatique corrige les informations de gestion de l'ensemble de données reçu en appliquant au moins l'une des méthodes moyenne mobile simple, moyenne mobile exponentielle, moyenne mobile pondérée, moyenne mobile géométrique et moyenne mobile harmonique.

**FIG. 1**

**FIG. 2**

FIG. 3

## FIG. 4(A)

100a

(a)

180a

## FIG. 4(B)

100b

(b)

**FIG. 5(A)**

(A)

**FIG. 5(B)**

(B)

## FIG. 6(A)

(A)

## FIG. 6(B)

(B)

**FIG. 6(C)**

<u>100</u>

110

181

185

180

(C)

**FIG. 7**

| Pneumatic fender management unit |
|---|

Communication unit

| Pneumatic fender |
|---|

| Wireless transmitter |
|---|

| Antenna | Position sensor | Pressure sensor |
|---|---|---|

**EP 4 450 712 B1**

**REFERENCES CITED IN THE DESCRIPTION**

**Patent documents cited in the description**

- JP 2015143672 B